Europäisches Patentamt

European Patent Office

Office européen des brevets

(11) Publication number: **0 105 186**
**A1**

## EUROPEAN PATENT APPLICATION

(21) Application number: **83108517.0**

(22) Date of filing: **30.08.83**

(51) Int. Cl.³: **G 06 F 9/44**

(30) Priority: **09.09.82 US 416434**

(43) Date of publication of application: **11.04.84**
**Bulletin 84/15**

(84) Designated Contracting States: **AT BE CH DE FR GB IT LI LU NL SE**

(71) Applicant: **Executec Corporation, 12200 Park Central Drive, Dallas Texas 75251 (US)**

(72) Inventor: **Moyer, Larry G., 1019 Kiowa Drive East, Lake Kiowa, Texas 76240 (US)**

(74) Representative: **Loesenbeck, Karl-Otto, Dipl.-Ing. et al, Jöllenbecker Strasse 164, D-4800 Bielefeld 1 (DE)**

(54) Computer system software interface bus.

(57) A computer system having a central processor and at least two user interactive function programs for controlling the central processor is operated by interfacing the programs along a common bus which via a bus control, selectively accesses the function programs along the bus to control the central processor in accordance with a user program.

EP 0 105 186 A1

ACTORUM AG

COMPLETE DOCUMENT

## BACKGROUND OF THE INVENTION

The present invention relates to computer systems and in general to a method and apparatus for operating a computer system with at least two user interactive function programs for controlling the central processor thereof.

The popularity of personal computers has brought about a proliferation of computer systems that are available and the many operating systems and languages used thereby, presents an almost insurmountable obstacle to the software developer to provide products that can execute in a wide range of environments. Some of these obstacles include the fact that the operating systems perform the same basic functions but require different interfaces to the operating systems, even those operating systems which are compatible are likely to require slightly different interfaces, every keyboard and display screen combination on every computer operates with different features and requirements and the various types of computers will likely utilize a different instruction set.

This free form environment has made it possible for software producers to create programs that operate in only very specific environments and which necessitates substantial changes to be used with new computers.

The user of the microcomputer is likewise faced with obstacles to the effective use of his computer. These obstacles include operating systems which have been created to facilitate the production of programs and their execution and not to facilitate the use of computers, the lack of uniformity in the software produced by thousands of individual software authors each of which deals differently with the man-machine interface situation, different documentation techniques and styles with each new product purchased, virtually no compatibility of data between

2

various products from different authors, and noncompatible software between one computer and another.

The lack of standards in the industry and the absence of any consistency that can be relied upon by the user have created substantial disadvantages in known computer systems.

SUMMARY OF THE INVENTION

The main object of the present invention is to overcome the problems and disadvantages of the prior art computer systems and to provide a computer system and a method of operating same whereby control is effected by a software bus.

The software bus in accordance with the present invention makes it possible to have consistent presentation of screens and operational characteristics, standard sign-on and security provisions for all processors under the control of the bus, a master menu approach to process selection, consistent and uniform commands, independence from operating systems and hardware technology, fully integrated products which operate in harmony with the ability to share the data files even where products were originally written by different authors and protection from changing physical environment.

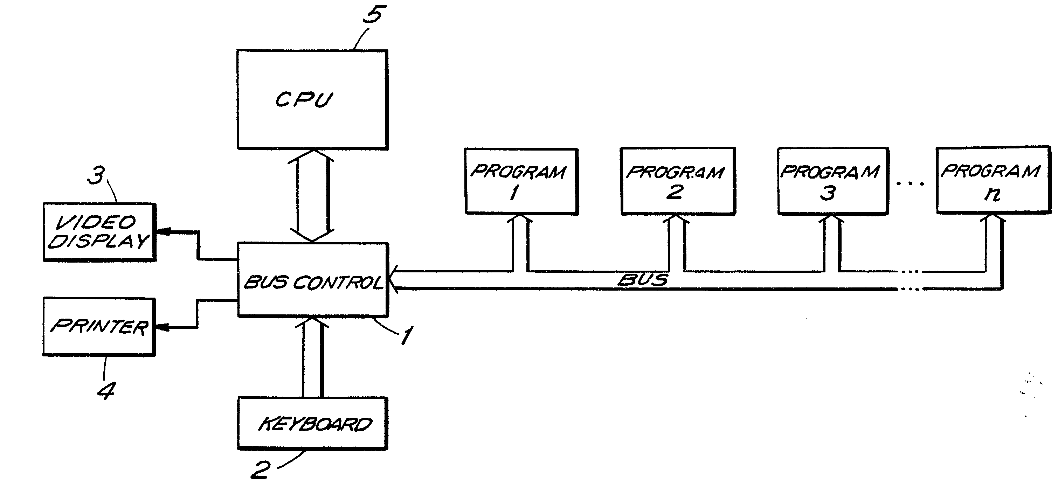

These and other advantages of the present invention will be described in more detail in the foregoing and in reference to the attached drawing wherein:

BRIEF DESCRIPTION OF THE DRAWING

The Figure shows a block diagram of the system according to the present invention.

The appendix hereto in the form of computer printout sheets constitutes a complete source program listing which will cause a computer to perform the desired task according to the present invention.

## DETAILED DESCRIPTION OF THE INVENTION

As shown in the Figure, the interface bus connects all of the user interactive function programs along a bus under the control of bus control 1. The end user who initializes the system via keyboard 2 with outputs of video display 3 and printer 4, is effectively unaware of the presence of the bus while the software products, programs 1-n are tightly coupled to the bus and therefore aware of this existence via bus control 1. The CPU 5 with its operating system is effectively interfaced with any one of programs 1-n via the bus and bus control 1 so that programs 1-n need not be tailored to the particular operating system of CPU 5 and the control inputs of keyboard 2.

1. Functions

This section will describe the specific features of the bus as they apply to both the user's perception of the computer and the programmer's interface to the bus.

1.1 Standardized User Interfaces

Access to the bus is accomplished by submitting a command to the native operating system which merely causes that operating system to load the bus initialization logic. The initialization logic will request that the user 'sign on' and provide a 'password' that will entitle the user to have access to the products operating under the bus. The user identification and password are cataloged in a disk file that is known as the 'user profile'. This file is created and maintained by a bus utility program and is restricted to a 'privileged' user. Once the user has 'signed on' to the bus a Bus Master Menu will be presented. This menu describes each individual process that a user may exercise and provides an opportunity to select a process for execution. The following sample screen depicts the format of the Menu display:

MASTER MENU

User Id:......                              Date: ../../..

            Please enter the number that appears to the left
            of the process to be executed then press 'return'.
            0. Display Utilities Menu
            e. Exit to Native operating system
            1. Sales Management System
            2. Bank Manager System
            3. User Manual Creation Facility
            4. Data Management Facility
            5. Purchasing System
            The Master Menu will reflect all processes that
are eligible for execution.  In a floppy disk environment
all possible processes cannot possibly fit on a single disk
or even two disks.  If the user selects an unmounted
process, the bus will alert the user and request the mount
of the proper disk.

            The menu concept is used frequently through all
products that are controlled by the bus.  The style and
method of selection of the functions will be consistent with
the master manu by convention only.  The bus does not
specifically enforce this rule, it only creates an
environment that emphasizes the usage of menus.

            When the process selection has been made and the
product requested is loaded into memory for execution, the
user will perceive very consistent screen displays and
utilize the keybord in a specific and consistent manner.
1.1.1      Keyboard Usage
            The keyboard of each computer supported by the bus
is described by one of the tables of the bus.  This table
defines the keys as well as the hexidecimal codes that are
generated by each key.  With such knowledge the bus can
react to the virtually any keyboard.  The table will additionally define the hexidecimal codes which are to be
passed to the programs executed under the Bus control.  A
given key (left arrow) may generate a code of x'01', but the
Bus may pass a code of x'08' to the program.  The user is
never aware of this translation process.  The user is only
aware that the 'arrow' keys will always move the cursor to
predictable points on the screen.

Certain keys are predefined by the bus and will in
fact cause the bus to perform functions outside of the
control of the programs executing at that point.  The four
keys used most frequently that fall into this category are:

- P - Transfer the contents of the screen to a
  printer.
- S - (or some other designated key) Display help
  information relating to this process.
- U - Set the cursor on the command line in
  anticipation of the receipt of a menumonic
  command.
- Z - Completely refresh the contents of the screen.

Certain other keys will result in specific actions
across product boundaries but by convention rather than bus
forced activities:

- f1 (function key one) - advance to the next
  logical entity.  For some processes, this means to
  display the next record and for others, to display
  the next page of data.
- f2 (function key two) - backup to the preceding
  entity.  For some processes this means to display
  the prior record and for others, to display the
  prior page of data.
- return - This key is used to signal to the process
  that the user has finished entering data on the
  screen, and that the data is to be acted upon.

- Arrow keys - these keys are used to move the cursor to the next position on the screen (right arrow), previous position (left arrow), previous line or field (up arrow), or next line or field (down arrow).
- fl-f9 - The functions fl thru f9 are not mapped to any specific action. However the products that execute under the bus are encouraged to use function keys to determine program flow, as opposed to control key sequences. In fact the bus will not pass control keys to the process except in those cases where the program must be aware of bus managed control keys, such as the 'help' key. For those machines that do not support function keys, the bus will simulate a function key by allowing the user to enter the 'esc' key followed by a number (1-9).

In addition to key conventions, the bus integration rules dictate that the following commands will result in predictable actions when entered from the command line:

- T or Terminate - Terminate the current process and return control to the master menu.
- E or EXIT - Terminate the current function and return to the program or function that caused the current function to be invoked.

1.1.2    Screen Presentation

The bus provides support for two basic types of screen mapping:

- Native Mode - Operating programs have complete control of the presentation area
- General Form - The bus will partition the screen

7

into logical areas for the convenience of the end user.

The native form is allowed for certain products that require complete control of the entire presentation area. These products are generally the exception cases. Examples of such processes are:

- Electronic spreadsheet products
- Graphic displays
- Video games

The native mode simply means that the process is entirely responsible for mapping the contents of the screen and interpreting the keyboard inputs. The only bus _ intercepted inputs are the z, s, and p keys.

The general form provides the end user with consistent screen images both in structure and usage, while allowing the programs which generate the screens to relate to the screen in terms of 'frames' of data, as opposed to specific lines of data on the screen. The layout of the screen is as follows:

```
------------------------------------------------------------
                        Process Name
User Id:......                          Date: ../../..
- - - - - - - - - - - - - - - - - - - - - - - - - - - - - -
                        Prompt Frame
- - - - - - - - - - - - - - - - - - - - - - - - - - - - - -
                   Interactive Data Frame
- - - - - - - - - - - - - - - - - - - - - - - - - - - - - -
          Command line        Error Messages
- - - - - - - - - - - - - - - - - - - - - - - - - - - - - -
status 1     :     status 2     :     status 3     :     status 4
------------------------------------------------------------
```

The layout of the screen is directed at the problem of a user's perception of convenience of the use of computers.  The specific frames are positioned with certain
human factors in mind which will be described as each frame
is discussed.  Each logical frame is independently addressed
by the programs which interface with the bus.  The first
frame on the screen is called the 'header' and is maintained
by the bus outside of program control.  The first line of
this frame contains a description of the process being
performed by the user.  The description is identical to that
presented in the master menu regardless of the specific
program being executed at the time.  The bus will capture
the description and insure that it is presented on any
screen display.  The second line of this frame contains the
identification of the user that signed on to the bus during
initialization, as well as the current date.

The second frame on the screen is variable in size
and will house user prompting information as well as help
information if the user presses the designated help key.
The process dictates the number of rows that will be
dedicated to prompt data.  The program is responsible for
providing the data and the bus is responsible for displaying
the data.  The user may not enter data into the prompt frame
since it is protected by the bus.  This protection is
accomplished by controlling the cursor placement as opposed
to any specific hardware feature. The programs operating
under the bus may not issue read requests which would
retrieve data from the frame.  When help information is
requested, the bus will overlay the prompt frame with
process specific help information and allow the user to
'page' through the help data if more data is present than
can be displayed in the allocated space.  The space bar is
used to advance to the next segment of help data and the
return key is used to return control to the interrupted
program.  Prior to returning to the processes, the bus will

9

refresh the screen to be the image that existed prior to the help request.  Only the prompt frame is overlaid in order to preserve the user's view of the data area.

The difference between prompt and help information from the bus standpoint is:

- The prompt identifies what is expected from the user for a particular screen.
- Help data is a statement of how to accomplish that which is expected of the user.

The third frame on the screen is the 'data' frame. This area of the screen is used extensively by the end user to accomplish the functions of any given process.  At_least 80% of all operations will be carried out in this area.  The user may enter data into predefined fields or type data free form into the area, as when using a text processing function.  Another 10% of the functions of the process will be accomplished via function keys that are not related to any specific frame.  The other 10% of the operations will likely be accomplished with menumonic commands submitted on the 'command line'.

The command line appears as the fourth frame on the screen and is used for both command submittal and error message display.  The user may gain access to the command line by submitting the  u key sequence, or the process may specifically request data from this frame thereby forcing the cursor to the command line.  If error messages are to be displayed, the process will direct the text to the command line in order to preserve the data in the data frame.  The positioning of this line is important since the natural line of sight is toward the bottom of the screen.  Error messages in this area will therefore be more easily noticed.  By bus convention, no more than 10% of the actions of the user should be accomplished by commands.  When commands are used,

10

they will be menumonic and consistent across processes.  For
example, a file or record save will be accomplished via a
command of 's' or 'save' in all processes.  This convention
is encouraged by the bus,  but not enforced.

The final frame of the screen is for status
information.  The end user must at all times be aware of the
actions being taken by the software.  The status line is
specifically for this purpose.  The bus establishes the
environment for the status information and manages the
display of the data.  The process is responsible for the
determination of what data is to be displayed and when.  The
line is segmented into four fields, each of which is
independently addressed by the programs executing under the
Bus.  Following are the fields and data which will occupy
these fields:

- Status 1 - Operator directives
    * Wait
    * Enter
- Status 2 - Process operations
    * Help (Bus managed)
    * Printing (Bus managed)
    * File Read
    * Processing
    * Sorting
    * File write
    * Function Load
    * Sorting
    * Searching
- Status 3 - Reserved for bus usage.  This field
  will be managed by the bus to alert the user when
  'mail' or messages from other users are present in
  the system for display.
- Status 4 - This field is reserved for a sequence

11

number which will inform the user of continuing progress when a response is not possible in less than 2 seconds. The process is responsible for determining the frequency of update of the sequence number, and the bus is responsible for the display of that sequence number.

1.1.3       Operational Characteristics

The operation of the products that execute under the control of the bus will be essentially identical for the reasons already outlined:

- Consistent usage of   p,   z,   u, and help keys
- Consistent usage of function keys
- Consistent meaning of 'return'
- Consistency of commands
- Consistent screen presentation.

In addition to these features, the bus provides a mechanism for chaining independent programs together to form a specific process. This is analagous to an inverted tree of a hierachial environment. With, e.g., Text Processing (a specific application of the micro computer) a process under the control of the bus and consisting of multiple programs, it might operate as follows:

<pre>
                    (Master Menu)
          User selects Text processing option
                         0

                         0

              (Text Processing Menu)
                         0

    ************************************************

      0                      0                      0

      0                      0                      0

   (Editor)              (formater)           (text print)

      0                      0                      0

Write/edit/display    Format text and print    Print only
</pre>

The user will always start an operation with the Master Menu. The menu, as described earlier, presents a list of all possible processes that a user may exercise. From this master menu, the user will select the text processing option. The master menu program will then cause the text processing menu program to be called and overlay the master menu (physical action is based upon the facilities of the specific operating system) via a specific call to the bus. The text processing menu program will again control without actually knowing which program (if any) called it. This program will present a menu of functions that are specific to the text processing process such as document edit, format, and print. The user will next select the desired function in the same manner that the original process was selected. If document edit is selected the edit program will be called in the same manner that the text processing menu program was called. This program is responsible for creating, altering, and displaying document files. At any point in the edit operation, the user may exit the function by entering the command of 'e' or 'exit' from the command line. The edit program will then exit to the bus without any knowledge of which program caused it to be activated. The bus will reload the text processing menu program since it was the called and activate it. The menu program will have no awareness of why or who called it, it only knows that it has a specific function to perform. Likewise, if the user submits a command of 'e' or 'exit' at this point, the master menu is recalled. If the user does not wish to return to the text processing menu but rather wishes to return to the Master Menu, a command of 't' or 'terminate' will cause any program at any level to exit to

13

the bus only the Master Menu program is recalled as opposed to a return to a specific caller.

In short, the user perceives the computer as a tree of possible processes and functions within processes with the root always being the Master Menu. The definition of major limbs and branches is largely up to the process. Products that execute under the control of the bus are encouraged to adapt the philosophy of cooperative programs of potentially independent origin but this philosophy is never apparent to the end user.

1.2        Standardized Program Interfaces

The bus is designed to satisfy a number of requirements. In addition to providing the end user with a high degree of consistency and usability of software products it provides the software author with independence from actual hardware and operating system considerations. The programs that execute under the bus are never aware of these factors since all calls for service that would normally be handled by the operating system and/or hardware are directed specifically to the bus for action. Therefore any program that is written to the bus interface specification, and in a language supported by the bus, can be moved to entirely different computers without modifications. The most extreme step that might be necessary in order to address the new environment might be a recompilation of the program when different computer architecture is being addressed. The only component of the total software that ever needs modification is the nucleus of the bus itself. When the bus is moved to new computers that utilize the same architecture and operating system as some other system, a single bus table must be customized. If the computer utilizes a different operating system, a small segment of the bus nucleus must be modified. If the architecture is entirely new, another segment must be modified and the bus must be recompiled. In any event, those programs that execute under the control of the bus are never impacted.

The key to this portability of programs is the bus itself. The bus provides the facility for movement of processes and also provides a total computing environment for all programs that will typically far exceed the scope of most operating systems or other types of system software. The sections that follow describe the program interfaces to the bus as well as the specific software tools that are available for insuring consistency of presentation and ease of implementation. The full discussion of the actions of the various components of the bus will be discussed in a later section.

1.2.1     Keyboard Usage

The variety of keyboards currently on the market can present several interesting challenges to software authors. The function key is a good example of the total lack of standards. Certain micro computer systems utilize function keys while others do not. Among the systems which do present function keys, there is no standard character or character string generated when the key is pressed. One machine might generate the string "esc a  1' while another will generate a single character of x'01'. For this reason, most current software offerings avoid the use of a very powerful and convenient mechanism for the usage of the computer. The same situation exists with cursor control keys (arrows). Programs operating under the bus are shielded from the device characteristics, and therefore have access to those features. All data read from the keyboard is first inspected by the bus and when appropriate transformed into a 'neutral' or 'meta' stream before being

15

handed to the requesting program.  Programs will call the
bus for input instead of the native operating system.  The
following charts present the various control keys, cursor
control keys, and supported function keys available to the
end user as well as the values what will be presented to the
program, regardless of the device specifics.  The normal
data keys are left unaltered and are represented by standard
ASCII characters.

CONTROL KEYS

| Key (alternate) | Program Input | Function |
| --- | --- | --- |
| d (left arrow) | 04 | Move cursor left one position |
| h (bs/del) | 08 | Backspace (destructive move) |
| i (tab) | 09 | Horizontal tab |
| j (down arrow) | 0a | Move cursor down one line |
| k (up arrow) | 0b | Move cursor up one line |
| l (right arrow) | 0c | Move cursor right one position |
| return | od | Return key |
| Help key | 13 | Help key (machine specific input) |
| u | 15 | Accept command line input |

The following control keys are also reserved by
the bus and will not be used by any program.  These are
intercepted by the bus and will be acted upon as noted:

| z | | Refresh the entire screen |
| p | | Print the contents of the screen on the printer. |
| t | | Toggle between processes |
| a | | Ignored |
| q | | " |
| x | | " |
| r | | " |
| e | | " |

16

The use of any cursor control key which effects cursor position will result in an actual cursor movement by the bus.  The program need not echo the character or cursor, as would be the case when interfacing directly to the operating system.  Normal data keys are also echoed by the bus at the next position of the cursor to the right.

FUNCTION KEYS

| Key | Simulated key | Program Input |
| --- | --- | --- |
| f1 | esc 1 | esc 0 p |
| f2 | esc 2 | esc 0 q |
| f3 | esc 3 | esc 0 r |
| f4 | esc 4 | esc 0 s |
| f5 | esc 5 | esc 0 t |
| f6 | esc 6 | esc 0 u |
| f7 | esc 7 | esc 0 v |
| f8 | esc 8 | esc 0 w |
| f9 | esc 9 | esc 0 x |

Programs operating under the control of the bus will receive input from the key board only when a specific call is made to the bus requesting that input.  The program is not given control again until the bus has satisfied the request.  The following function calls will perform the read requests.  The function calls are presented in terms of a program written in the 'c' programming language for simplicity sake.

GENERAL READ

The bus provides a single function call which will cause the data entered on the keyboard to be passed to a program.  The program is given control only when a specified number of characters has been entered by the user or when a 'control' key is pressed (function key, help, return, etc). All control sequences are translated to their proper 'meta'

17

equivalents prior to the control transfer. The bus will also automatically echo the data characters to the proper position on the screen based upon the current cursor position. The program need only react to the data.

The following represents the formal parameters that are passed to the sread function call. The parameters are described in order to give the reader an indication of the structure of a request to the bus. This structure is maintained throughout all bus requests.

<u>sread(len,buf,rqa)</u>

- len - the number of data characters to accumulate prior to returning control to the program.
- buf - a pointer to the data area that is to receive the data.
- rqa - a pointer to a request area which has the following format:

    * Frame reference - a one byte id of the frame that to be addressed. A value of 'd' will cause only data in the data frame to be transferred and in fact the user cannot move the cursor outside of the data area. A value of 'c' will cause the cursor to be positioned to the command line and only data from the command line will be transferred.

    * Reserved - the eleven bytes (11) following the frame reference are reserved for future implementation.

The read request will cause the bus to accept data from the keyboard and return that data (with or without conversion to a meta stream) to the program when the read count has been satisfied or when a control sequence or function key is entered.

TEST FOR AVAILABLE INPUT

The rtest function call returns a true or false condition to alert the program to whether or not keyboard input has been accumulated.  The function call is normally used only in those exceptional cases in which the program might allow a user to interrupt a process by pressing a key on the keyboard.

1.2.2     Screen Mapping

As in the case of keyboard reads, the programs will interface with the bus in order to display data on the screen.  The method of displaying data on the screen differs widely between devices.  The bus addresses this variable in the same manner in which keyboard characters are handled: control sequences are expressed in terms of meta commands instead of specific terminal commands.  The following chart presents the various meta commands that may be passed to the bus from a program in order to control the display.  These commands may be imbedded in text delivered to the bus for normal data writes.

SCREEN CONTROL SEQUENCES

| | |
|---|---|
| esc#rc | Position cursor to row and column (absolute). This command is used only for the native form of screen management. |
| esc[nD | Position cursor backwards 'n' positions. |
| esc[nB | Position cursor down 'n' rows. |
| esc[nA | Position cursor up 'n' rows. |
| esc[nC | Position cursor forward 'n' positions. |
| esc=rc | Position cursor to row and column relative to the current frame being addressed (data or prompt frame). |
| ****** | All row and column references are expressed relative to zero and the value 'n' is always expressed relative to one (1). |
| esc[OK | Clear from the current cursor position to the |

19

```
                         end of the line.
esc[1K                   Clear the entire line currently being
                         referenced by the cursor.
esc[OJ                   Clear from the cursor to the end of the frame
                         (or screen in the case of native support).
esc[2J                   Clear the entire screen.  Valid only for
                         native form screen management.
esc3J                    Clear the prompt frame (general form screen
                         management).
esc4J                    Clear the data frame (general form screen
                         management).
escH                     Horizontal tab.
escD                     Move cursor down one row.
escE                     Move cursor down one row and column one.
escM                     Move cursor up one row same column.
esc7                     Save current cursor position.
esc8                     Restore cursor to last saved position.
esc[a;a;a;a;aM Set field attributes
        -        a0 - set all attributes off
        -        a1 - set bold face on
        -        a2 - set underscore on
        -        a3 - set blink on
        -        a4 - set reverse video on
        -        a5 - set low intensity on
```

        Each field attribute requires one byte of buffer
space regardless of the device requirements.  Any use of the
set attributes command string will generate at least one
byte of control data in the bus screen image buffer, as well
as in the physical device.  Even if the only attribute is
the 'set all attributes off', one position is required.
Multiple attributes may be set, but the programmer must be
aware that different device may represent varying results
since some attributes can cancel others.

20

All requests for screen management or data displays will be directed to the bus with specific function calls. The following functions form the basic set of bus screen management facilities.

GET ATTRIBUTES

The getatb call will return a structure that currently defines the attributes of the physical device. This structure is stored at the location referenced by 'ptr' and has the following format:

- total terminal rows
- total terminal columns
- Prompt frame rows currently assigned.
- Data frame rows currently assigned.
- Screen format
  * General format - g
  * Native format  - n
  * Masked format  - m (later release of the bus)
- Absolute cursor row and column (current position)
- Current row and column position relative to the current frame being addressed.
- Current frame being addressed:
  * Prompt frame   - p
  * Data frame     - d
  * Command line   - c
  * Status line    - s

SET SCREEN FORMAT

The format request is normally issued at the beginning of each program in order to establish the screen environment. The environment is maintained until another format request is issued regardless of how many programs are called. The function will perform the following actions:

- Clear the entire screen
- Build the header frame based upon the current process description, user id and date.
- Build the status line and clear all status fields.
- Establish the size of the prompt and data frame based upon program input.

The format function expects a pointer to a structure that defines the type of screen management and frame sizes as follows:
- Screen mode
  * General form - g - establish the basic screen environment as described earlier with the dimensions provided in this structure.
  * Native form - n - clear the screen but do not build a header or status line. Ignore any frame dimensions since the entire screen is under the control of the program.
- Prompt Frame size (number of rows)
- Data frame size (number of rows)

SCREEN WRITES

The bus will manage all transmissions to the display screen. The program need only present a string of characters to the swrite function in order to cause those characters to be transmitted to the screen. Any cursor controls are presented as data within the character string in the 'meta' form. The specific frame which is to be addressed is specified in the request area as outlined in the discussion of the keyboard read function call. Each frame is independently addressed as far as the cursor commands are concerned. The first position of each frame is referenced as row 1, column 1. The header frame cannot be addressed and will remain intact until the next process selection from the main menu. The prompt and data frames can be selected at will. The only rule for writing these frames is: The data may not exceed the bounds of the

22

selected frame.  The bus will automatically wrap the data
that would exceed the bounds back to the front of the frame.

This call expects a series of parameters that
define the location of the data to be transmitted, the
length of that data, and the pointer to the request area
which further qualifies the request.

HELP FACILITY

The bus provides a general function call (help)
that will manage the display of all help data from a program
in response to an entry of the 'help' key.  The program is
always responsible for the receipt of the help character but
need only invoke the 'help' call to display the data.  This
function is provided with the name of an external help text
file and the relative position of the help data to be
transmitted within that file.  The bus will present the data
within the prompt frame (if present) and react to the user's
requests for either additional help data (that which could
not be presented in the assigned frame) or a return to the
active process.  The space key is used to advance the text
to the next segment when the data cannot totally reside in
the frame and the return key will cause the screen to be
refreshed and the program reinstated at its 'next sequential
instruction'.  If a prompt frame is not assigned, or it
occupies less than 3 rows on the screen, the data frame will
be used for the display of the help text.

1.2.3 FILE MANAGEMENT

Processes operating under the control of the bus
have access to file management facilities which provide the
end user with greater operational flexibility and provide
the software products with independence from the physical
characteristics of disk storage devices.

Users and therefore, programs need not be aware of
the physical location of files on disk drives.  The bus maintains a 'catalog' of all processes that can execute under its control. This catalog specifies, among other things, the disk drives that may house data files for the process. The bus will automatically search the valid drives for a requested file and allocate new files on the drives according to available space. The maintenance of this catalog is addressed in a later section.

Device independence is achieved by presenting the file access in a totally logical manner. Programs do not reference physical blocks, sectors, or records. Instead, they reference a file as either a contiguous string of data characters or multiple strings of characters of known size (logical records). The logical records may be referenced by way of their relative position within the file (RBA) or by a 'key' to the record.

File management can be divided into two categories of support: 1) an elementary view of the file, 2) a structured view of the file. Each view will be addressed separately.

1.2.3.1 THE ELEMENTARY VIEW

The file management functions that support the elementary view are divided into two classes:

- Primitive requests
- High level requests

The two classes have a single philosophy in common; a file is simply a contiguous string of data characters without any structure. Each byte of the file may be independently addressed relative to the start of the file (RBA). Any structure that is imposed on the file is dictated by the process that utilizes that file not by the bus file management. If logical records are germane to the process, they are established by the program. If a logical record is 100 characters in length, the program simply reads

24

and/or writes segments of 100 characters. The program may position the file to any RBA in the file for data access.

The primitive class functions are named based upon the level of support and the awareness of the physical environment. These functions are not normally used by software products since the implementation is variable based upon operating system and machine architecture. These functions provide the basis for the higher level functions. They are available for those few specialized programs that need such 'low level' access to data files. The functions that form the 'primitive' class are:

- Open - open a data file for either read, write, or update access.
- Close - close a specified file and update the proper operating system control blocks.
- Create - establish a new file on an available disk drive.
- Unlink - remove a file from a disk drive and return the vacated disk space to a pool of available space
- Read - transfer a specified number of characters from a file to the program from the current RBA
- Seek - position the file to a specified offset from the start, end, or current position of the file (RBA).
- Write - transfer a specified number of characters from the program to the data file beginning at the current RBA.
- Access - determine if a file exists on the mounted disk drives.
- Dskreset - set all mounted disk drives to a read/write status. This function is highly operating system dependent. It will exist in all systems however, the effects may vary from one operating system to another.

The typical program access to data files will be through the higher level functions. These functions correspond in syntax and facility to the UNIX operating system functions for access to sequential data sets. They will utilize the primitives just described for the physical access. The following is a list of the supported functions and a summary of the actions taken:

OPEN A FILE

The fopen function call will logically open a data file and allow the program to either read data from the file, write data to a file that has not previously existed, or append data to a file which currently exists. In place data update is not allowed with the high level support.

CLOSE A FILE

The fclose function call will insure that any data that remains in data buffers and has not been written to the file is actually written then the file is closed.

POSITION FILE

The fseek function will logically position the file to a specified offset from the beginning of the file, the end of the file, or the current position (forward or backward) of the file.

READ DATA

Multiple functions exist for retrieving data from the file. The fgets function will return a specified string of characters to the program from the current position of the file. If a cr/lf sequence is encountered prior to exhausting the stated count, the function will suspend the data transfer. Additionally, the cr/lf sequence is converted to a null character (00h) in the programs data buffer.

The fgetc function will return the next character from the file based upon the current position.

The ungetc function will return the last accessed character to the data buffer for subsequent access.

DATA WRITES

Two functions are available for transferring data to a file. The fputs function will transfer a specified number of characters from the program buffer to the data file starting at the current RBA. The fputc function will transfer a single character to the file.

The high level functions do not necessarily cause physical data transfer to or from the disk. Internal buffers are maintained by the bus and physical events will occur as the bus deems necessary.

1.2.3.2 STRUCTURED FILE VIEWS

The bus provides still another type of access to data files through the use of the Bus Structured Access Method. This access method provides the program with a direct path to logical records via specific RBA reference or keyed access. This access method is particularly important since it represents the programmer's access to Interprocess File Descriptors as well as data access. Prior to describing the functions of the Structured Access method, we need to fully understand the nature of the IFD and its usage.

Software products which execute under the control of the bus are encouraged to utilize a standard file structure whenever possible in order to address the following issues:

- Communication of data files between non-related software products.
- Usability of the data files by generic bus utilites which provide the following:

* General print capability

* Data sorting

* General file display

* Data update, delete, add capability

The files normally used on micro-computers and supported by the bus fall into two general categories:

- Text Files - unstructured, variable length, ascii files with a logical record terminator between each record.

- Tabular Files - Structured, fixed length, logical records (tuples)

Text files are basically free form in their structure when any structure is present. The rules for the usage of the file are entirely dictated by the process that creates the file. This type of file is normally accessed by way of the Unix level function calls.

The tabular file is by far the most universal type of file used by software products. The following is an example of such products.

- Accounting software

- DBMS applications

- Banking software

These files are typically contain multiple 'records' or 'tuples', each of which contain specific data fields that are used in the computing process. Each software product will typically define the structure of the records and the usage of the data fields according to the needs of the product. Specific product definition therefore implies specific knowledge and usage of that data. Other products can react to that data only when they also contain the structure and usage information.

28

The bus and specifically the structured access method provides a facility for the definition of data files in order to allow generic programs and utilities to reference the data. The data definition facility additionally allows software products to reference the files in a more logical manner as opposed to a fixed definition approach. The data definition is housed in a control structure known as the Interprocess File Descriptor. This structure may be an independent file on the same disk as the data file or it may occur in the actual data file.

The IFD is basically a table of data definitions. Each logical record in a file (tuple) may be further defined by considering the attributes of individual fields (columns). A data file, containing 3 logical records of three fields each can be represented in a table as follows:

COLUMN

| NAME | AGE | SEX | |
|------|-----|-----|---|
| J. Jones | 13 | M | : |
| R. Smith | 29 | F | :(Tuples) |
| A. Roberts | 52 | M | : |

This data may be physically stored on the disk file as follows:

J. Jones        13MR. Smith      29FA. Roberts 52M

Each column in the table will be represented in the IFD along with the data attributes of the column. The attributes include such characteristics as:

- Data type
- Edit rules
- length
- Etc.

The IFD structure consists of a general description of the file, a general description of the tuple and descriptions of the columns which comprise the tuple. Perhaps the easiest way to describe the IFD is to describe the contents of the structure. The reader should be aware that the programs which utilize the structured access method need not be aware of the IFD. If programs are written to be general in nature, they will typically base decision making processes upon the IFD description of the data as opposed to the specific knowledge of data files. The following information is typical of the data stored in the IFD structure:

File description*****************************************

| | |
|---|---|
| Table name | A 31 character field which describes the nature of the file or simply provides an english style file name |
| Presentation size | The maximum dimensions required for the file when displaying or printing the data. Normally this represents a form size when the IFD is being used to describe a pre-printed form. |
| Access type | An indicator as to whether the file is referenced by a keyed index. The index is managed by the structured access method. |

Tuple Data ***********************************************

| | |
|---|---|
| Tuple Name | A 31 character field which names or describes the specific tuple that maps the file. |
| Tuple Length | The total length of all columns (fields) in each tuple (logical record). |
| Key information | An array of information concerning the |

various keys in the file.  This
information is used to describe the
various paths by which the file can be
referenced when an index is present.

| | |
|---|---|
| Column Data | \*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\* |
| Column Name | A 31 character  character name of the individual column.  This name is intended to be used as both an internal program data name and the external user data name. |
| Column Length | The length of the specific column. |
| Fill Characters | If data does not entirely occupy the column, this attribute will describe the character which will fill the unused positions of the column. |
| Justification | An indicator as to whether the data is left or right justified in a column which might not be completely filled with data. |
| Date Type | An indication of the type and usage of data in this column.<br>- A - alpha ascii data<br>- M - Mixed alpha/numeric data<br>- N - Numeric data<br>- S - Signed numeric<br>- U - Unsigned numeric<br>- H - Hexidecimal data<br>- D - date field<br>- X - Control information |
| Decimal Places | The maximum number of decimal places in the data occupying this column. |
| Row/Column | The placement of the data in this column |

on a screen display or a printer
expressed in terms of relative row and
column.

Attributes          A code which identifies the screen
display attributes to be used in the
presentation of the data in this column.
- R - Reverse Video
- U - Underline
- B - Blink
- H - High intensity
- L - low intensity

Graphics Flags     An indication of whether or not the data
in this column can be represented
graphically an the type of measure.

Any data file which is accessed by the structured
access method must be described by an IFD.  The IFD may be
constructed by a software program at execution time or may
be delivered as a file with the actual product when the
structure of the data files are fixed by product design.
The following functions are available to users of the
structured access method:

Open              The open function will logically open a
file mapped by the IFD and store the IFD
in a buffer provided by the program.

Locate          Locate a specific tuple (logical record)
within the data file by either the
relative location of the record from the
start of the data or, in the case of
keyed files by a specific key value.

Read             Transfer a tuple (logical record) from
the located position to the program data
buffer.

Write            Transfer a modified tuple back to the

|         |                                                                                  |
|---------|----------------------------------------------------------------------------------|
|         | data file and update the index if any keys were altered (indexed file only).      |
| Add     | Add a new tuple to the data file and update the index if appropriate.             |
| Delete  | Remove a tuple from the data file and remove the key references from the index if appropriate. |
| Gather  | This function will perform the same action as the read function except that the program will pass the names of the specific columns to be returned.  Only that data will actually be placed in the buffer and in the sequence of the designated column names. |

## 1.2.4 PROGRAM MANAGEMENT

The bus assumes responsibility for the loading of programs, dispatch of those programs and management of all memory resources.  Individual programs are never aware of the actual actions taken by the bus during the execution of its responsibilities.  The programs are only aware that they have been called into action by some other program or as a result of being selected from the Master Menu.  When the program 'exits', it is logically finished with its function. This exist would normally return control to the native operating system, however, under the bus the exit will cause some other program to be invoked.  This 'other' program may be the Master Menu or an application program which caused the exiting program to be called.  The determination is based upon the function that was used to call for the exiting program.  The following functions available for program flow control:

| Chain | The function call of overlay will cause |
|-------|-----------------------------------------|

the current program to end and a
specified program to be loaded and
dispatched.  The new program will
execute and if it exits, the calling
program will be reloaded and dispatched
at its normal entry point.

Overlay                 The same function call of overlay, with
an additional parameter will cause the specified program to
be loaded and dispatched, however, when the new program
exits (if at all) the called program will not be reloaded.
Instead, the program which invoked the call will be loaded
or the Master Menu program will be invoked if the top of the
hierarchy has been reached.

1.2.5 PRINTER MANAGEMENT

Printers, like the screens and keyboards, present
continual problems to software producers simply due to the
highly variable manner in which they are controlled.  The
bus addresses the issues in a manner similar to the screen,
i.e. meta streams and high level functions calls.  The bus
will support all printers which are directly supported by
the operating system.. If special I/O drivers are required
to access a printer, it is the responsibility of the
hardware vendor to supply them.  The bus will also support
those characteristics of printers that make the most sense
in a business environment.  That is, those attributes which
a business professional would utilize in preparing memos,
reports, and draft documents.  Programs which utilize the
bus printer support will have access to meta command similar
to those used for screens:

PRINTER COMMENDA

| Meta Stream | Function performed |
|-------------|--------------------|
| esc8 | Advance paper to the top of form |
| escE | Vertical Tab |

34

```
esc[nC                    Forward space 'n' times
esc[nB                    Line Feed 'n' times
esc[oM                    Turn Bold Face OFF
esc[lM                    Turn Bold Face ON
```

The specific sequences which are generated by these commands are controlled by the device Characteristics Table.  Programs access the printer by submitting bus provided functions calls.  The following are supplied:

OPEN PRINTER

The function call popen will initialize the printer and if it is not attached will return an error code. The initialization string established by the user will be sent at this time.

WRITE PRINTER

The function call pwrite will transmit a string of characters to the printer and translate imbedded meta strings to actual printer controls.  If any character in the string has a value of less than 20h (with the exception of cr,lf sequences), the character will be translated to a space character.  If a tab character is encountered, it will be converted to 8 spaces.

CLOSE PRINTER

The function pclose will send a printer 'reset' sequence based upon the values established in the device characteristics table.

1.3 LANGUAGE INTERFACES

The bus and its standard utility programs are all written in the programming language 'C' as defined by Keringhan and Ritchie in the book "The C Programming Language", although other languages can be used.  Specific interfaces would be necessary in order to allow specific implementations of a language (specific compilers) to communicate the requests for service to a separate entity (the bus). Each language implementation will typically utilize different conventions for passing variable data to a separate facility. These interfaces simply convert the various communication techniques to a standard format which is acceptable to the bus facilities. A separate interface will exist for each specific language implementation. All languages typically support a 'call' level interface to a subroutine which may or may not be written in that native language. The bus approach will therefore be to implement a specific subroutine which will convert the request to bus standards then pass the request to the bus as if the request was being issued by a 'C' program.

2.0 STRUCTURE

The following sections will describe the structure of the entire bus. The product consists of multiple programs operating in a cooperative manner in order to accomplish the desired task. The control portion of the bus includes several cooperative subprograms or functions which when combined provide the facilities previously described. The control can be logically broken into four classes of software code:

- The memory resident 'Nucleus'.
- The program resident facilities.
- Transient utilities
- Initialization logic

Each of the classes of logic will will be discussed independently.

2.1 MEMORY RESIDENT NUCLEUS

The nucleus of the bus facility is that body of executable code and control tables which is always resident in memory regardless of the actions of software products and regardless of the product which executes under the control of the bus. The actual size of this nucleus will vary somewhat between machine architectures and operating systems. If the user is operating a computer based upon the Z80 chip with the CP/M operating system the bus nucleus will be 12K in size. The facilities supported by the nucleus are those which all software products executing under the bus will require, such as:

- File access to the operating system and physical devices.
- Program loading and dispatch logic.
- Memory management facilities.
- Process flow control.
- Screen/keyboard access to the operating system and devices.

The logic in the bus nucleus is generally referred to as the 'primitives'. These facilities are directly concerned with the physical environment and the operating system. The primitives represent approximately 95% of all of the bus logic which is in any way sensitive to the physical environment.

The nucleus area also houses all tables and control blocks which are necessary for the proper control of the bus environment. The tables will be discussed in detail in a later section. In summary these tables are as follows:

CVT (communication vector table) The control block which provides a 'road map' to the various bus functions and certain dynamic data such as current user id, date, current process id, etc.

Process Catalog A series of descriptions of the various programs which may execute under the control of the bus. These descriptors provide the bus with knowledge of the requirements of the programs such as allowable data drive ids.

Device Control Table

> A table which defines the physical characteristics of the screen, keyboard, and the printer (if attached).

Screen Image Buffer

> An exact image of the contents of the screen as perceived by the user.

File Control Blocks

> A pool of buffers and operating system specific control blocks which are used to read and write the disks.

2.2 PROGRAM RESIDENT FACILITIES

A large percentage of the facilities of the bus are actually resident with the software program which executes under the control of the bus. These facilities are typically 'high level' functions which will interface with the Nucleus in order to accomplish the desired results. They are not operating system or architecture sensitive, only 'nucleus' sensitive. The exact facilities that are program resident will vary somewhat based upon the native operating system. If sufficient memory and operating system facilities are available, the functions (or at least a portion of them) may reside in the Nucleus. The general philosophy regarding location is simply: Common facilities are resident and variable usage facilities are program resident. The detail description of the facilities will be presented in the section dealing with the component description. In summary, these facilities are:

- High level file access.
  - * Unix level I/O
  - * Structured access method
- High level Screen Management
- High level Keyboard Management
- Printer Management

2.3  UTILITIES

A portion of the bus facilities are complete programs which execute under the control of the nucleus and may utilize the program resident facilities to accomplish specific functions.

These utilities provide certain bus control file maintenance as well as user facilities.  Their primary purpose is to allow the user to control the operation of the computer without forcing that user to do so under the native operating system.  The component description section will provide more detail regarding the utilities.  The following is a brief summary of these utilities:

Directory Display   A program which will display the names of the files which are mounted on the available disk drives.

File Delete         A program which will allow the user to remove one or more files from the mounted disks.

File Rename         A program which will allow the user to alter the name of a file(s) on the mounted disks.

General Print       A program which will allow the user to print a file which was created by any bus controlled software product.

General Display     A program which will allow the user to display and scan any file which was created by any Bus controlled software product.

Copy/Reform         A program which will allow the user to make copies of one or more files as well as to alter the format or content of those files when the file is mapped by an IFD.

Sort                        A general facility whereby the user can
                            alter the sequence of the logical
                            records in a file.

Index Reorganize            A program which allows the user to
                            reorganize the keyed index of a file
                            supported by the Structured Access
                            Method.  The reorganize function is
                            normally performed in order to enhance
                            the access speed of such files.

Process Configuration A program which allows the user to
                            install new bus supported products as
                            well as alter the definition of certain
                            system wide variable such as:
                            - printer definition
                            - date format convention

Profile Maintenance A program which allows the primary user
                            (privileged) to add new valid user ids,
                            alter passwords, list current users, and
                            delete users.

2.4  INITIALIZATION LOGIC

        The bus and the execution environment is
established by a single program which is brought into being
by the user's submission of an operating system command.
This command simply causes the native operating system to
load the initialization logic.  The logic will validate the
user id and password then construct an execution environment
from the various disk resident control files and programs.
The logic executes only once, at bus start-up. When the bus
has been loaded, it will be overlaid with other programs.

2.5 MEMORY MAP

0105186

The following illustration depicts the
organization of the various components in memory as well as
the interfaces between the components:

```
------------------------------------------------------------
                    OPERATING SYSTEM
----------------------------------V------------------------
                    BUS NUCLEUS LOGIC
-----------------------------       -------------------------

    Tables          :                   :  Control Blocks

----------------------------------V------------------------

-----------------------------------  ------------------------

    ----------------------               ----------------------
    :High level funct:                   :High level function:
    ----------------------               ----------------------
                SOFTWARE PRODUCTS (PROGRAMS)
                    AND BUS UTILITIES
------------------------------------------------------------
```

3.0 COMPONENT DESCRIPTION

The sections which follow describe the individual components of the bus as well as the relationship of the components to each other. These descriptions are intended to provide an architectural overview of the system as opposed to a detailed accounting.

3.1 NUCLEUS MANAGEMENT

As stated earlier, the bus nucleus contains the logical 'primitives' of the system. These components provide the actual operating system interfaces as well as hardware interfaces. They form the set of bus facilities which are commonly used by all processes. The facilities cannot be thought of in terms of programs. Rather they are a collection of loosely coupled routines (or functions) which exist in a single load module. The relative placement of the functions in the load module is entirely arbitrary as is the selection of the specific functions to be included.

41

This capability is provided by the design of the component referred to as the Bus Management Facility (BMF). BMF is charged with the responsibility for the following:

- Dispatch high level requests to primitive functions resident within the nucleus.
- Initiate new processes.
- Intercept direct operating system requests.
- Terminate processes.
- Load programs.
- Manage the flow of programs.
- Dispatch programs after request completion.

BMF is itself a collection of routines which are loosely coupled. These routines may call each other or even call themselves recursively in order to accomplish the desired results. The sequence of execution of routines is determined by the request itself as opposed to a request parsing facility. The only routine that comes close to being a parser is the function which directs 'non nucleus' facility requests to nucleus routines for service.

FUNCTION DISPATCHER

The function dispatches is a routine which has the responsibility for directing the calls from non nucleus requests to specific nucleus functions. A distinction is made between non nucleus requests and high level requests since the bus architecture places no restriction upon the location or facility performed by any routine. Primitives may reside within the program area or the nucleus. Likewise, the high level functions may reside within the nucleus. A non nucleus function is simply some facility which resides within the program area and is loaded as a part of the executable program. The function dispatcher exists to direct the request to a nucleus routine.

Executing programs are totally self contained in the sense that all 'stack' areas 'heap's' etc. are allocated and managed by that program and are separate from the nucleus areas. When the program requests a bus facility, the request may be acted upon by program resident facilities and/or nucleus facilities. If the bus nucleus is called to perform the service, the program is unaware of the transfer of control. In fact, even the non nucleus facility is unaware that the nucleus is involved. The non nucleus facility will at some point invoke a function, believing that the function is an 'inline' body of code. The function will however be an assembly language routing that effects a 'call' to the function dispatcher of the nucleus with a unique code identifying the actual function to be executed.

The function dispatcher is charged with the responsibility of performing a logical task switch then invoking the desired routine with the same calling parameters as passed by the non nucleus function. The task switch will involve changing stacks and any other control manipulations required to preserve the callers integrity. The bus itself will execute with a completely independent stack. The function dispatcher has knowledge of the location and identification of the various routines by virtue of a table of values in memory. This table is constructed by the link edit process of the bus nucleus and modified when necessary by the bus initialization logic.

INITIATE NEW PROCESSES

The process initiation logic is invoked when the bus is initiated as well as the point in time that a process is completed. The primary function of this logic is to establish an execution environment for the next process to be selected then load the master menu program. The specific actions taken by the routine will vary somewhat from operating system to operating system.  If the operating system and the machine architecture allow for more than 64k memory, the routine may take steps to gain awareness of unused areas of memory in order to map its usage to the advantage of the bus.  The bus release which addresses multiple processes will also add facility to this routine.

Process initiation utilizes the nucleus program loader to cause the master menu program to be brought into memory.  Once loaded, the menu program is given control as if it were a normal application program.

OPERATING SYSTEM REQUEST INTERCEPT

Any process may issue a direct call to the native operating system and the bus nucleus will frequently issue such requests.  The Intercept logic is charged with the responsibility of 'filtering' certain operating system requests which would impact the operation of the bus and passing all others through.  The specific requests which will be filtered will vary by operating system however they fall into the general category of requests which would cause the termination of the bus.  Under the CP/M operating system the 'boot' requests will be intercepted and control will be given to the Process Termination logic.

PROCESS TERMINATION

The process termination routine is called whenever a process program issues an exit to the operating system which would normally terminate that program.  This routine will investigate the stack of calling programs then either invoke the next higher level of caller or call the Process Initiation logic if the stack is empty.  A program is placed into the program stack when it issues an 'overlay' request and designates that it is to regain control when the called program exits.  This function will not make any attempt to close files opened by the exiting program or perform any

44

other cleanup except to release memory resources which were allocated in order to load that program. Like the process initiation logic, it will utilize the program loader to cause the load of the designated program.

PROGRAM LOADER

The program loader facility is a general routine used to bring all program into memory from a designated disk drive and place those programs at a location specified by the caller. The routine has knowledge of the disk location (drive id) by virtue of a value stored in the Communication Vector Table (CVT). This value is stored by the Overlay Processor. If the program cannot be found on the drive a call is made to the Logic Error facility in order to alert the user that a disk mount is required. If the LEF routine returns a positive code this routine will retry the program load, otherwise a call is made to Process Initiation to abort the process and reload the Master Menu program.

LOGIC ERROR FACILITY

The LEF routine is called whenever a file (used or program) cannot be found online. The caller may be the program loader or the user file open logic. Lef will form an error message and present it to the user. This message will simply notify the user that the file or program could not be found and request a disk mount. The user has the option of mounting a new disk or terminate the process. The user response to this message will determine the value of a return code which is passed back to the caller. The source of the message is an error message file that is resident on the same disk as the process programs. If the message file cannot be found, a bus termination is forced.

OVERLAY PROCESSOR

The overlay processor is charged with the responsibility of interpreting program overlay requests from

45

application programs or the Master Menu Program then calling the program loader to act upon the request. Program overlays can be nested, non nested, or process root specific. The differences effect the manner in which the program stack is handled and how the knowledge of the location of the programs is gained.

| | |
|---|---|
| Nested Calls | If the caller requested a nested overlay, it is essentially asking the system to reload the caller when the called program completes. The overlay processor will place the callers program identification in a 'stack' referred to as the 'program stack' then invoke the program loader. |
| Non Nested | This form of overlay request states that the caller wishes to be replaced by a new program and does not want to be recalled when the new program completes. The overlay processor simply calls the program loader in this case. |
| Root Module Call | A special variation of the overlay request is available to the Master Menu Program in order to start a new process. Each allowable program is cataloged in a resident table called the Process Catalog. The table identifies the attributes of each program including location of the program (drive id), memory requirements, type of program (root module or subordinate program), etc. Only 'root' programs are displayed on the master menu. When the user selects a process, the restricted |

version of the overlay request is
issued. This request will scan the
catalog and validate the nature of the
request. Additionally, it will store
the location of the program and the
identification of the allowable data
drive ids in the CVT. All programs
which are called by this process will be
expected to reside on the designated
drive and all data files will be
restricted to the noted drive ids.

PROCESS DISPATCH

The process dispatcher simply insures that the
process is placed in an executable status after the
completion of a service request. This task switch involves
resetting the stack pointers, etc. The final act of the
routine is to return to the calling process at the next
sequential instruction with any return values from the bus.

3.2 FILE MANAGEMENT

The file management logic is divided into two
basis categories: Elementary support and Structured
support. The primary distinction between the two relates to
the view of the file by each type. The location of the
facilities (in memory) will also vary. Each category will
be discussed separately.

3.1.1 ELEMENTARY VIEW

A previous section discussed the elementary view
as being a contiguous stream of characters with no structure
except as imposed by the process. Within this view there
are two levels of support. The primitive level is that body
of code which acts most closely to the physical environment
and the operating system. The high level support is

47

completely independent of the environment and conforms to the Unix standards for file system support.

The primitive level of support is entirely resident in the bus nucleus as a set of callable routines. The routines may be referenced by the processes or internally by other functions in the nucleus. If the process issues a primitive file request, the function dispatcher is responsible for the invocation of the proper routine. The following routines (functions) form this primitive level of support:

MAKEFCB

This routine is responsible for the management of a pool of operating system file control blocks and related buffers. The nucleus of the bus will contain a fixed number of the control blocks and buffers which will be used by all processes and all file requests. The bus is entirely responsible for the retrieval, update, and dissemination of the file data. The characteristics of the control block will vary between operating systems however for the CP/M operating system this control block directly equates to the CP/M FCB. The buffer size will also vary by operating system. For CP/M the size will typically be 128 bytes since CP/M will only transfer that amount on a disk operation. Each control block/buffer combination will at some point be attached to a file which has been opened by the process or the Bus. All I/O requests to or from the file will occur from this buffer. The makefcb routine is responsible for the allocation of the buffer on the open request. The close request merely flags the buffer as "deallocated'. The buffers are not currently chained and read aheads are not supported, however facilities have been anticipated in order to allow such support in future releases of the bus.

FILE OPEN

48

The file open logic performs all operating system opens as well as file location functions. The process or the bus may be very specific about the location of a file or may allow the open logic to 'find' the file. File location may or may not be germane to the operation of the system depending upon the facilities of the operating system. The Unix operating system does not account for drive ids, rather it utilizes a hierachial directory system to provide knowledge of file locations. The CP/M and MS-DOS operating systems require that file opens contains specific drive id references. The bus will attempt to shield the user and processes from such knowledge to the extent possible. If the process presents a drive id with the name of the file to be opened, the open logic will address the specific disk drive. If the file cannot be found on the drive, LEF is invoked in order to allow the user to mount a new disk or request an abort of the process. The open routine will interpret the return code from LEF and either "reopen' the file or call Process Initiation. If the process specifies a drive id of 'e', the routine will look for the file on the drive which houses the process programs. If the process does not specify any id, the routine will scan the 'allowable' data drives to find the file. Allowable  data drives are stored in the process catalog and captured in the CVT when the process root program is selected from the master menu. In cases where the process specified an id, the routine will verify that the specification is actually within the allowable drives. A 'file not found' condition will logically occur if the drive is invalid.

CREATE FILES

The create routine operates somewhat like the open function except that its responsible for establishing a new file in the operating system directory. The rules for drive

49

ids apply to this routine as well. If no drive id was specified, the routine will start with the first valid drive and attempt to allocate the directory space. Only when all drives have been attempted will it return an error condition.

FILE CLOSE

The close routine simply performs the proper operating system close and releases the allocated buffer and control block. This routine makes no attempt to flush the buffer or make any other process decisions regarding the data in the buffer.

READ/WRITE DATA

The read and write routines transfer data to or from the process areas to the buffers and when appropriate perform physical disk accesses. The number of bytes of data to be transferred are stated by the caller and may span multiple buffers. It is the responsibility of this routine to determine when disk accesses are required and which portion of a physical block of data is to be operated upon.

FILE ACCESS

The access routine is responsible for determining whether or not a file exists. It operates essentially like the file open routine except that it will only return a code to the caller to indicate whether or not the file exists. The buffer allocated via the open is not allocated and LEF is never invoked when the file is not present. The handling of allowable drives is the same as the open logic employs.

FILE DELETE

The 'unlink' routine performs those actions which are necessary to remove the file reference from the operating system directory of files. The specific implementation will vary greatly depending upon the operating system facilities which are available. Under the CP/M operating system, the unlink is accomplished via a specific CP/M call.

SEEK

The seek routine accomplishes both a logical and a physical positioning of the disk file. A seek request by a process or a bus routine will cause this routine to invoke a physical seek to a position on the media in conjunction with a logical marker on the relative byte address within the block. The requestor will present a relative byte address from the start of the file, end of the file, or current position to this routine. This routine is used to address specific areas of a stream of characters when the process wishes to react to the file in a structured manner.

An additional class of I/O facilities exists within the elementary category. These facilities are generally referred to as the high level functions or the Unix compatible functions. An overview of the functions were presented in an earlier section therefore need not be repeated here. The high level functions are entirely process resident facilities and make specific calls to the nucleus resident primitive I/O routines. A full description of the operation and facilities of the high level I/O components can be found in the "C Programming Language" book by Keringhan and Ritchie. This book forms the standard definition of the C language and the high level I/O interfaces. These specifications are fully implemented under the bus.

3.2.2    STRUCTURED ACCESS METHOD

The structured access method is a process resident facility which utilizes the File I/O primitives resident in the Nucleus in order to provide a logical record view of a file to processes. The facility utilizes the Interprocess File Descriptor as a means of gaining knowledge of the structure and definition of a data file.  This facility is a
collection of routines, each of which provide specific
facility to the requesting software programs.

The IFD was generally described in an earlier
section, therefore need not be discussed in any detail here.
This control block, in effect, provides a simplified data
dictionary for a single data file.  The structured access
method utilizes the definition to determine whether the file
is referenced by an external index or determine whether the
file is referenced by an external index or is to be
processed serially.  Additionally, the IFD defines the size
of the logical records, the attributes of each data field
within the record, and the fields which are used to identify
each record (keys).

The individual function calls represent specific
routines.  These routines may call upon each other and in
some cases may call themselves recursively.  The following
is a summary of their actions:

FILE OPEN

The 'ropen' function call invokes a routine which
will perform a primitive open of the data file and the IFD
file if the IFD is stored in a separate file.  A header to
the actual data in the data file will determine the location
of the IFD.  The lFD is then stored in a buffer provided by
the calling process and control data is extracted for future
reference.  The transfer to the buffer is accomplished via
primitive File I/O request to the Nucleus such as 'seek' and
'read'.  At this point the IFD is accessible to the process
as well as the structured access method.

RECORD LOCATE

The locate function call will cause a locate
routine to be invoked.  This routine will accept a relative
byte address of the desired record or a key value as input.

If the process wishes a record which is identified by a specific key value, it will provide the search criteria with the request. If the data file is indexed, the routine will call upon the index management routines to search the index of key values and return a relative byte address of the record to 'sam'. The purpose of the locate is to point to a record which will be read or written at a later point. The following is a summary of the various types of locates which may be performed by this routine:

Relative Address      If the requestor passed an RBA, the routine will logically (and physically) position the file to a point referenced by the passed relative byte address from the start of the data portion of the file. The positioning is accomplished by a call to the primitive 'seek'.

Key Value      If a key value is passed to the routine, the index will be searched for a match or the next higher value if a specific key value cannot be located. The RBA of the data record will be retained in anticipation of other action and a primitive seek issued.

RECORD READ

The read routine will transfer a logical record from the current pointer to the data buffer assigned by the process. The structure of the logical record is determined by the IFD.

WRITE RECORD

The write routine will transfer a data record from the process buffer to the data file starting at the current file location. The write is accomplished by calls to the bus nucleus for seek, and write primitives. If the file is indexed and any key value is altered in the data record, the routine will cause the modified keys to be changed in the index. Protection from dual writes is provided. The process may not rewrite the record until another locate or read command is issued.

READNEXT

A readnext routine is present to account for the process which needs to read the file serially from some starting point. The read request must have been previously issued. The routine will literally transfer the next logical record on the file based upon the last "key" accessed on the last logical record.

If the file is indexed, a qualifier code may be presented which will accomplish one of the following:

Next Unique       A qualifier may be passed when the next unique key is to be located in the index. The routine will access the index to find a key value which is higher than the last key value accessed.

Next Key          A qualifier may be passed when the next sequentially key in the index is to be accessed. Multiple synonyms may occur for any key value, therefore this request may return the pointer to another record with the same key value.

READ PRIOR

The rprior routine cause the previous serial logical record to be transferred to the process without regard for an index (if present) of the sequence of the date file.

RECORD ADD

The add routine will cause a new logical record to be transferred from the process buffer to the data file at the physical end of the file. Additionally the routine will cause the addition of any new key values to the index if it is present.

DELETE

The delete logic will cause the record currently being referenced and last read to be logically deleted. The delete status is indicated by setting the primary key to nulls then writing the record back to the file. If an index is present, the key value(s) is removed from the index.

INDEX MANAGEMENT

The index managed by the Structured Access method is an optional file which will provide a rapid reference to logical records in a single file. The file may be referenced by up to two independent keys. These keys may have an unlimited number of synonyms.

The basic architecture of the index is a B tree scheme with certain conceptual differences in order to reduce the memory requirements. The impact of the conceptual differences is slight in relation to the facility accomplished. The scheme is oriented to rapid retrieval with slightly less efficient key addition capability.

The index management is accomplished by a series of routines which are called by the structured access method and which call for services from the primitive file I/O routines in the nucleus. The following is a summary of the major components of the index management logic: INDEX OPEN

The 'opendx' routine is entered by the 'sam' to accomplish a physical and logical open of the index file when the IFD state that such an index is present. This open will verify that the file is an index and store certain control data in a buffer passed by the open request. This buffer is resident in the structured access method.

SEARCH FOR A KEY

The 'getkey' routine will search for a specific key value within a specified key type and return the RBA of the record which is referenced by the key.  If the key value cannot be found the routine will return the next higher key value and its RBA.

RETURN NEXT KEY

The 'getnxtky' routine will return the RBA of the next sequential key in the index within a specified key type.  The requestor may specify that the next unique value or the next value is to be returned.  This routine will execute only after a getkey function has preceded it.

ADD NEW KEY

The 'addkey' routine simply places new key values in the index along with the reference to the data record.

DELETE KEYS

The 'deletky' routine will remove key and data references from the index.

The index is maintained dynamically by the 'sam' and typically never needs to be reorganized.  At some point in the time the user may wish to reload the index in order to improve performance.  The index load facility is nothing more than an extract of the data file, the sort of the extracted keys and a rebuild of the entire index from the sorted key file.  This process is accomplished by a bus utility program.

3.3 SCREEN MANAGEMENT

The screen management facilities of the bus consist of a series of routines which control the keyboard as well as the display screen.  A portion of the facilities will exist within the nucleus of the bus and others within the process itself.  The two major categories of routines may be referenced as low level routines and high level routines.

## 3.3.1 LOW LEVEL ROUTINES

The low level routines are those which are concerned with the physical environment, the operating system interfaces, and interpretation of the variable tables which describe the devices (device control tables). These functions are utilized by the logic which deals with the program requests. Certain of the low level routines are resident in the Nucleus and others are resident in the process. The placement is entirely arbitrary and based upon the amount of memory available in any specific computer as opposed to design consideration. Computers with at least 128k of memory will utilize a bus nucleus that contains virtually all of the screen management facilities.

The following is summary of the more important low level functions:

SMFPOS      A function which is responsible for the positioning of the cursor to some program requested row and column.

SMFSTR      A routine which is used to output the terminal dependent strings stored in the device control tables.

SMFFRM      A routine which is called for each cursor position command and character write in order to keep track of the frame.

Refresh      A routine which is responsible for refreshing a screen from the Screen Image Buffer.

SMFOUT      A routine which is responsible for actually deliverying a character or characters to the physical device via the operating system.

SMFATB      A routine which translates the program requests for screen attribute settings to actual device controls.

INCHAR      A routine which represents the operating system interface to the keyboard. This
routine accomplishes the actual keyboard
read.

SMFPRT      A routine which is used to transfer the
            contents of the screen image buffer to the
            printer.

SMFINP      This routine is responsible for the
            translation of input control sequences to the
            appropriate meta streams for the program.


3.3.2   HIGH LEVEL FUNCTIONS

Those facilities which are directly referenced by
requesting programs are called high level functions. These
routines may be called directly by programs and will utilize
one or more of the low level functions to accomplish the
desired results. The general description of these functions
was covered in an earlier section therefore the following
represents only a summary of the actions taken.

FORMAT

This routine is called by the processes when the
screen is to be formatted or reformatted. The header is
constructed and the logical frames are established based
upon the request. Normally this routine is invoked once at
the beginning of each program if a format change is needed
otherwise it is used only once at the start of a process.

GETATB

This routine provides the calling program with
certain information regarding the physical definition and
current status of a display screen. Information such as
physical dimensions will be passed to the caller.

HELP

This routine is responsible for the display of any
help information to the end user based upon a file of text data as stated by the requesting program. It will manage
the display of the data, the acceptance of user commands
which control the paging of the data, and the refresh of the
screen prior to returning to the program.

SREAD

This routine forms the primary interface between
the program and the keyboard. The routine is responsible
for the transfer of keyboard data, the translation of
control sequences to meta streams and the echo of data and
cursor on the screen.

SWRITE

This routine is responsible for the transfer of
data from the program to the screen. It manages the logical
frames, and translates meta streams to actual device
controls.

The entire set of screen management routines
depend very heavily upon two control blocks which are always
resident within the nucleus: 1) The device characteristics
table and 2) the screen image buffer.

These control blocks will be described in detail
in a later section. In summary, the device characteristics
table provides a description of the physical characteristics
of the screen, the keyboard, and the printer. The screen
image buffer is an exact representation of the display
screen at any point in time.

3.4   PRINTER MANAGEMENT

A series of routines are provided to insulate the
program from the characteristics of printers. These
routines are resident within the actual process. At this
point the low level (device knowledgeable) functions
co-reside with the high level interfaces to the actual
program. These functions depend heavily upon the device
characteristics table for knowledge of the printer. The

59

following is a summary of the actions taken by the routines. Both low level and high level routines are discussed.

OPEN PRINTER

The 'popen' routine is responsible for establishing the printing environment. It will insure that a printer is attached and return an error code if not. The routine will also transmit an initialization string that the user deems necessary to the printer. This initialization string might be a forms control or simply a 'skip to top of form'. This string, if present, is stored by the device characteristics table and may be altered by the user via the Config Bus Utility.

CLOSE PRINTER

The close printer routine is responsible for issuing any 'reset' sequence which is desired by the user. Like the open, these strings are represented in the device characteristics table and may be modified by the user.

WRITE TO PRINTER

THE 'pwrite' routine is responsible for the delivery of printable characters to the printer. It will utilize certain low level functions during execution such as:

| | |
|---|---|
| PSTRING | A routine which delivers device dependent characters to the printer. |
| PRTTRN | A routine which translates printer meta commands to device specific character strings. |
| PRTOUT | A routine which represents the interface to the operating system for delivery of the data to the printer. |

3.5 TABLES/CONTROL BLOCKS

The bus is similar to other system software products in one respect - to understand the product the reviewer must understand the control blocks. This section provides an overview of the tables and control blocks utilized by the bus.  Contents are discussed in order to establish usage.  Specific format for the control blocks is defined in the actual source code.

3.5.1 CVT

Perhaps the most important control block used by the bus is the Communication Vector Table (CVT).  The cvt is located in high memory prior to the Bus Nucleus Code.  The physical placement is somewhat based upon the operating system.  Under CP/M it actually starts the Nucleus area. This control block provides inter-module communication and system information for all bus components.  It is constructed by the bus initialization logic from a standard structure and various pieces of information from system files such as the User Profile.  The contents of the cvt are as follows:

- Jump to Operating System Intercept Routine
- Jump to Bus Function Dispatcher
- Jump to Process Termination
- Jump to Process Initiation
- Saved jump instruction addresses from CP/M control blocks

------Pointer Table Portion------

- Pointer to function table
- Pointer to control block portion of the cvt
- Pointer to machine state flag
- Pointer to process control block
- Pointer to screen mode flag
- Pointer to screen image buffer
- Pointer to user profile data

------Control Data------

- Machine state flag (process or bus control)
- Current executing process name

- Process control block
- Profile data
  - User id
  - Date
  - user number
- Function table.

## 3.5.2 PROCESS CONTROL BLOCK

The process control block (pcb) is resident within the cvt and declares those variables which are unique to a given process. As multi-process capability is added to the Bus multiple pcb's will be present. The contents of this control block are as follows:

- Process Id
- Root program name
- Process description
- Allowable data drive ids
- Program drive id
- Status flags
- Type of screen mgmt inuse (native or general)
- Request overlay table

## 3.5.3 USER PROFILE

The user profile is a disk resident table of values relating to the usage of the bus and all software products which execute under the control of the bus. The disk table is constructed by a bus utility and maintained by the same facility. The file provides information concerning the users who may have access to the bus. This information is used during bus initialization to validate the user id and password. The data is then stored in the CVT for use by other components of the bus. A user number is stated in each user segment of the file as a means of providing file security among the users. This code will have different meaning in different operating systems. In general it provides a means of allowing several users to operate on different files, each having the same file name.  The disk
table contains the following information:

- Up to 25 user definitions:
  * User Id
  * Password (encrypted)
  * User number (1-15)

## 3.5.4 DEVICE CHARACTERISTICS TABLE

The device characteristics table is a disk
resident table which contains terminal, keyboard, and
printer attributes.  The table is distributed with the bus
in a form which cannot be modified by the user.  The table
is predetermined according to the specifications of the
computer.   The printer variables in the DCT can be altered
by using the Config Bus utility.

This table is brought into memory by the bus
initialization logic and will remain memory resident during
the execution of the bus.  The types of data contained in
this table are as follows:

- Type of terminal interface (serial or memory
  mapped)
- Timing data for delays after certain cursor
  controls
- Keyboard generated data for cursor controls
  (arrows)
- Keyboard generated data for function keys
- Physical dimensions of the display
- Rules for presentation of cursor control
  sequences.
- Printer sequences for initialization string, reset
  string
- Printer sequences for top of form, vertical tab,
  etc.

## 3.5.5 PROCESS CATALOG

The process catalog (CAT) is a disk resident table which is constructed by the Config utility when a process is installed under the bus. The file will always reside on the same disk as the bus nucleus files. It is brought into memory during the initialization step and remains in memory during the bus execution. The memory resident version of the CAT is a compressed version of the disk version and will contain the following data:

- Program id - one entry in the catalog for each allowed program.
- Process memory requirements
- Allowable data drive id's.
- Drive id where the program will reside
- Process description (root program only)

3.5.6 SCREEN IMAGE BUFFER

The screen image buffer is an area of the nucleus which will reflect the exact image of the display at any point in time. This buffer is constructed and maintained by screen management facilities. It is used for the screen refresh facility, the help facility and the screen print facility. In addition to the screen image, the following data is captured:

- Current cursor position.
- Home position of the prompt frame.
- Home position of the Data frame.
- Saved cursor position.

3.6 UTILITIES

The following sections describe the various utility programs which are distributed with the bus and are considered to be components of the bus. These utilities provide certain facilities for the user as well as logic for the control and maintenance of the bus environment. Each utility operates under the control of the bus and utilizes normal software product interfaces to the bus.

3.6.1 MASTER MENU

The master menu program is a required component of the bus for execution of any process. This program is responsible for displaying all available processes to the user and providing a means of selecting the process for execution. This program also performs certain internal functions which are normal application programs are restricted from using.

The first action taken by the program is to scan the memory resident process catalog, looking for each entry which represents a 'root' program for a process. The root programs will carry process descriptions as a part of the program entry. These descriptions are then placed on the screen with a reference number to the left. Since more processes may be present than can be represented on the screen, the program will display as many as possible on the screen and indicate that more options are available. The user will respond to the display by entering the reference number of the process to be executed or pressing the f1, f2, or return keys. The f1 key will cause the next group of processes to be displayed if any exist. If there are no additional displays, the first group will be displayed again. The return key will accomplish the same action unless the user has entered a selection. If a selection is entered, followed by the return key, that process is started. The f2 key is used to review the previous group of processes.

Once a selection has been made, the program will relate the reference number to a program name as stored in the process catalog. The description of the process is stored in the CVT for use by screen management in preparing the screen headers.  The menu program will then perform a file close for any files which were left open by some previous process.  This close process involves a scan of bus nucleus file tables by the Menu program.  The final function of the program is to issue an overlay request for the desired program.  This overlay request is a special variation on the request that a normal application program would issue.  This request will cause the bus to store certain information from the catalog such as allowable data drive id's, for use by all subsequent overlay requests.

The master menu program is responsible for establishing the execution environment for a process.  Any preparatory work, cleanup, etc. is placed in this program. The program will respond to the help key by invoking the help function.

3.6.2 DIRECTORY DISPLAY

A directory display program is provided with the bus in order to allow the user to perform all normal operations without the need to return to the native operating system for such operations as the directory display.  This program is represented on the master menu as any other process would be.

The exact specifications for the resulting display are variable by operating system.  For CP/M systems the program will display file names in the cp/m form of xxxxxx.sss.  The user may select the disk drives to be displayed or default to all mounted drives.  The user may also control the selection of files to be displayed by exercising certain generic name capabilities such as all files with a suffix of 'sss' or all files which contain certain characters in certain positions.

The fl, f2, and return keys will be used to control the display when more than one screen of information is available. The fl and return key will advance the display to the next group of files or the next drive when a group is exhausted. The f2 key will cause the previous drive to be displayed. As in all cases of bus products, the help key will cause the program to invoke the help function for display of user help information.

3.6.3 FILE DELETE

As in the case of the directory display program, a utility is provided to allow the user to remove files from disks or file systems without the need to return to the native operating system.

Again, the specifics of the display and input will vary by operating system. In general all operations will conform to the CP/M version. This version allows a user to delete one or more files from anyspecified disk drive. Multiple files can be deleted by specifying a generic file name. All files with a specified suffix may be deleted or all files with specific characters in specific positions of a name may be deleted. Since each user may have a separate user number, only those files that carry the proper user number are affected.

3.6.4 FILE RENAME

A program is provided which allows the user to alter the name of any file which is referenced by the users 'user number'. This program will operate against a stated disk drive id if the operating system allows for drive ids. In the case of the Unix operating system, drive ids do not exist therefore the program will allow the user to specify a directory name.

3.6.5 GENERAL PRINT

The bus includes a generalized file print utility as one of the options on the master menu. Thus utility will print (on the operating system supported printer) any
created text file and any file created with an IFD
describing it.  The presentation of the data may be on an 80
or 132 column printer depending upon the requirements of the
file.  This utility expects to be called as a result of a
user selection from the master menu or as an overlay of some
other program.  If parameters are passed to the program, it
will react to those parameters otherwise the program will
query the user for its inputs.  The parameters of user
inputs will be as follows:

- Starting page number
- Ending page number
- Amount of margin to leave on the right
- An indication as to whether to stop after each
  page or not
- An indication as to whether to include page
  numbers or not

During the execution of the program the user may
submit commands to accomplish the following:

- Exit - to terminate the print process and return
  to the calling program.
- Resume - to continue printing after a pause
- Pause - to temporarily stop the printing
- Terminate - to abort the print and return to the
  Master Menu.

If the source file is textual data, it will be
printed 'as is' except for imbedded 'new page' commands.  If
the line length of the data exceeds the capacity of the
device the line will be 'folded' onto the next line.

If the source file is a tabular file the data will
be formatted in a columnar fashion complete with column
headings.  If the print utility is called as a part of some
process it can be passed the name of an alternate IFD file which will describe the data which is to be printed. The presence of such a IFD will cause the print routine to 'transform' the data to the specifications of the Target IFD before actually printing. The target IFD may contain only a subset of the possible columns in the Source file. In this case, the routine will map the source to the Target and present only the Target columns which appear in the source file.

If the record exceeds the printer line length, or a column will break at a line break, the column data and column heading will be placed on a new line with staggered column names. If the column exceeds the capacity of the line, the data will be folded onto the next line and aligned with the column name.

Each page of the printed output will contain the column names as a heading unless the contents of the record cannot be placed on a single page. In this case, the next record will start on a new page with the column names repeated.

The following is a sample of the output for a file which contains logical records describing a name and address file consisting of:

- Name
- Address
- Address line 2
- State
- Zip
- Account number

```
+++++++++++++++++++++++++++++++++++++++++++++++++++++++++++++++++++++
+_ _ _ _ _ _ _ _ _ _ _ _ _ _ _ _ _ _ _ _ _ _ _ _ _ _ _ _ _ _ _ _+
+Name               Address              Address            +
+  State            Zip        Account Number               +
+_ _ _ _ _ _ _ _ _ _ _ _ _ _ _ _ _ _ _ _ _ _ _ _ _ _ _ _ _ _ _ _+
```

```
+
+
+John R. Anyname       1613 Street Address    City Name
+  Texas               74251       123689-768
+                              O
                               O
                               O
                               O
+++++++++++++++++++++++++++++++++++++++++++++++++++++++++++++++
```

## 3.6.6 GENERAL FILE DISPLAY

The bus includes a utility which will display any file created by the Text Editor or any file described by an IFD. If the file is a text file, the data will be displayed 'as is'. If individual lines exceed the capacity of the screen line, the data will be folded onto the next line. When the screen is filled with data, the program will pause and await user direction. The user may submit a fl or return key to review the next page of data or submit f2 to review the previous screen of data.

If the file is described by an IFD the data will be presented with the column names that describe that data. Columns which exceed the line length will be folded onto the next line. The following is an example of a display of a file that contains the columns:

- Name
- Address
- Address 2
- State
- Zip
- Account Number

```
+                                                          +
+  _ _ _ _ _ _ _ _ _ _ _ _ _ _ _ _ _ _ _ _ _ _ _ _ _ _ _ _ +
+                                                          +
+Name            John R. Anyname                           +
```

```
+Address           1613 Street Address                    +
+Address 2         City Name                              +
+State             Texas                                  +
+Zip               74251                                  +
+Account Number    123689-768                             +
+_ _ _ _ _ _ _ _ _ _ _ _ _ _ _ _ _ _ _ _ _ _ _ _ _ _ _ _+
```

When an IFD file is being displayed only one logical record is presented per display.  The record may span multiple screens and columns may span multiple lines. When a logical record has been formatted on the screen or the screen is filled to capacity with a logical record, the program will request directions from the user.  A command of return or f1 will cause the next screen for the record or the next record to be displayed.  A command of f2 will cause the prior record to be displayed.

The display routine expects to be called from the master menu or some other processes.  If the entry is from the master menu, the program will query the user for the name of the file to be displayed.  If the entry is from another program, this program expects to be passed a series of parameters which will define the name of the file to be displayed.  When other programs call the routine, the name of a target IFD file may also be passed.  If a target IFD is present, the display utility will transform the data in the source file based upon the data definitions in the target IFD before presenting to the user.  The target IFD may only contain a subset of the columns defined in the source file. In this case, only the target columns will be presented.

IFD files will be presented in the logical sequence of the file.  The index, if present, is referenced.  Query capabilities are present for the file.
3.6.7 DATA COPY/REFORM

A special utility will be provided which will copy files from one disk to another, copy and rename files, copy and alter the structure and/or format of the files based upon a target IFD definition.  This utility is called only by the Master Menu and will query the user for the following data:

- Name of file to copy.
- Drive id for the source file.
- Destination drive for the file.
- Name of the target file.
- Name of an IFD file which will remap the source file.

When a 'straight copy' is to be performed, the data is transferred 'as is' to the destination drive and file name.  The name of the new file is always set to reflect a temporary file until the copy is complete.  At that point the new file name is set to the correct value. This precaution is taken in case a disk error occurs which precludes the copy from completing.  If the target file already exists the utility will not allow it to be overwritten.

Transformed data may be generated by this utility as a result of mapping a file against a target IFD which differs from the original.  If the source file is not mapped with an IFD but an IFD is requested for the target file, the utility will concantenate the target IFD with the target data file.  This facility allows a user to remap data files which were not created by bus products to a form which can be utilized by bus products.  If the original files is an IFD defined file and a target IFD is presented, the utility will copy the data definitions based upon the new IFD.  Only columns represented in the target IFD will be copied.  If the target defines a column which does not exist in the

72

source file, the target file column will be set to the
filler character defined in the IFD.  If a difference exists
in the justification and filler character definition between
the source and target IFD, the target column will be
adjusted to reflect the Target definition.

The facility exists to allow users to redefine
data files which they have created or are being utilized by
the Personal Records Management or other bus products.

## 3.6.8 FILE MAINTENANCE UTILITIES

Several utilities exist within the bus which
perform file maintenance functions for the structured access
method.  The utilities include the following:

- Data Sort - a general utility for resequencing
  file mapped by IFD's.
- Index Reorganize - a utility which will load or
  reload an index for a data file mapped by an IFD.

## 3.6.9 PROCESS CONFIGURATION

The process configuration utility is present in
order to allow users to install new bus supported products
on the bus system.  This process is essentially one of
placing all programs which exist on a distribution disk on
the bus process catalog.  The bus will present any process
in the catalog on the master menu.  Thus utility simply adds
the programs to the menu facility.  In addition to creating
new catalog entries, the utility will place certain user
preferences in the catalog such as where the user will place
data file disks (drive ids) and where the user wishes to
mount the executable programs.  Certain information will
accompany the programs on the distribution disk that will
describe other attributes of the programs such as memory
requirements.  This information is stored on special files
which carry the name of the program and a file name suffix of 'fld'.  The 'fld' files will also carry the process
description for the master menu presentation.

The installation process is as simple as mounting
the distribution disk and selecting the Config utility from
the master menu.  If the user desires this utility will also
copy the distribution programs to another disk which may
contain other bus programs.  This facility allows the user
to stack multiple products on a single disk.

The Config utility may also be used to alter the
attributes of a process after it has been installed.  One of
its functions is to locate s specified process in the
catalog and change the process description to a user
specified name.  It can also change the data drive ids and
source program drive id.

The same utility will allow the user to change the
definition of the printer.  This facility is important if
the user wishes to change printers after the original
installation of the bus.

3.6.10  PROFILE MAINTENANCE

The profile maintenance utility is provided in
order to allow users to alter the list of acceptable users
who can have access to the bus facilities.  The user profile
is a disk file which contains the valid user id's, encrypted
passwords, and bus user numbers which effect a separation of
user data files.  The utility may be accessed by the system
'privileged' user only.  This user is set as an id of
'system' when the bus is delivered and may be altered by the
utility after installation.  The utility will allow the
following options:

- List currently defined users.
- Delete a user.
- Add a user.
- Change a user's password.
- Assign a privileged user.

74

## 4.7 SYSTEM INITIALIZATION

The final 'major' component of the bus to be discussed is the system Initialization logic. This program is responsible for the construction of the bus Execution environment and the validation of the user sign on. It will execute when the user enters a command of 'bus' to the native operating system. This command will cause the operating system to load the program identified on the directory as 'Bus' and pass control to it. The initialization program will construct all resident tables and control blocks from disk file versions and load the various nucleus components into memory. The program is also responsible for the validation of the user id and password based upon the current user profile file. The final act of the program is to enter the bus nucleus with a request for the load of the Master Menu as if the initialization program were executing under the control of the bus. At this point the user is operating under the bus and has all master menu processes available for execution.

WHAT IS CLAIMED IS:

1. In a computer system having a central processor and at least two user interactive function programs for controlling the central processor, the improvement comprising: means interfacing the programs along a common bus; and control means responsive to a user program for selectively accessing the function programs along the bus and to control the central processor in accordance with user program.

2. The system according to claim 1, wherein the control means comprises means for translating the user program instructions into the different function program instructions and for applying same along the common bus.

3. The system according to claim 2, wherein the control means includes means for serially accessing the function programs along the common bus, as required, during a given user program.

4. A method of operating a computer system with at least two user interactive function programs for controlling the central processor thereof, comprising: interfacing the programs along a common bus; and controlling the central processor in accordance with a user program by selectively accessing the function programs along the bus and to control the central processor in accordance with the user program.

5. The method according to claim 1, wherein the step of controlling comprises translating the user program instructions into the different function program instructions and applying same along the common bus.

6.    The method according to claim 5, wherein the step of controlling includes serially accessing the function programs along the common bus, as required, during a given user program.

```
        5
┌─────────────┐
│             │
│    CPU      │
│             │
└──────┬──────┘
       ⇅
       3
┌──────────┐        ┌─────────────┐      ┌──────────┐  ┌──────────┐  ┌──────────┐       ┌──────────┐
│  VIDEO   │        │ BUS CONTROL │      │ PROGRAM  │  │ PROGRAM  │  │ PROGRAM  │  ...  │ PROGRAM  │
│ DISPLAY  │        │             │      │    1     │  │    2     │  │    3     │       │    n     │
└──────────┘        └─────────────┘      └──────────┘  └──────────┘  └──────────┘       └──────────┘
┌──────────┐             1                              BUS
│ PRINTER  │
└──────────┘
    4
┌─────────────┐
│  KEYBOARD   │
└─────────────┘
    2
```

0105186

**European Patent Office**

## PARTIAL EUROPEAN SEARCH REPORT

which under Rule 45 of the European Patent Convention shall be considered, for the purposes of subsequent proceedings, as the European search report

Application number

EP 83 10 8517

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | ACM TRANSACTIONS ON DATABASE SYSTEMS, vol. 1, No. 3, September 1976 New York, US G. HELD: "The design and implementation of INGRES", pages 189-222 <br><br> * Pages 196-200: paragraph 2 * <br><br> -- | 1-6 | G 06 F 9/44 |
| A | IBM TECHNICAL DISCLOSURE BULLETIN, vol. 13, no. 3, August 1970, New York, US G.B. WEXLER: "Initial program load from remote terminal", pages 779 <br><br> * Complete article * <br><br> -- | 1,3,4, 6 | |
| A | COMPCON FALL 1980, Proceedings on Distribited Computing Conference on 23-25th September 1980 ./. | 1 | **TECHNICAL FIELDS SEARCHED (Int. Cl. 3)** <br><br> G 06 F |

### INCOMPLETE SEARCH

The Search Division considers that the present European patent application does not comply with the provisions of the European Patent Convention to such an extent that it is not possible to carry out a meaningful search into the state of the art on the basis of some of the claims.

Claims searched completely:
Claims searched incompletely: 1-6 , due to implementation
Claims not searched: by software compare
Reason for the limitation of the search: Art 52(2)C of the
European Patent Convention

| Place of search | Date of completion of the search | Examiner |
|---|---|---|
| The Hague | 23-12-1983 | THOMAES |

EPO Form 1505.1 03 82

| DOCUMENTS CONSIDERED TO BE RELEVANT | | | CLASSIFICATION O THE APPLICATION (Int. Cl ³) |
|---|---|---|---|
| Category | Citation of document with indication where appropriate, f relevant passages | Relevan to claim | |
| | Proceedings publ. by IEEE New York, US C.J. ANTONELLI et al.: "SDS/NET An Interactive Distributed Operating System", pages 487-493 -- | | |
| A | IBM JOURNAL OF RESEARCH AND DEVELOPMEMT, vol. 25, no. 5, September 1981 New York, US R.J. CREASY: "The origin of the VM/370 Time-Sharing System", pages 483-490 -- | 1 | TECHNICAL FIELDS SEARCHED (Int Cl ³) |
| A | IBM TECHNICAL DISCLOSURE BULLETIN, vol. 13, no. 9, February 1971, New York, US Two articles by W.G. HOWE et al.: "Integrated computer network operating system" on pages 2806-2810 and "Integrated computer network" on pages 2814-2818 ---- | 1 | |